# EUROPÄISCHE PATENTANMELDUNG

(11) **EP 0 535 267 A1**
(43) Veröffentlichungstag der Anmeldung: **07.04.1993**
(21) Anmeldenummer: 91116737.7
(22) Anmeldetag: 01.10.1991
(51) Int. Cl.: A01N 61/00, A01N 59/16

(54) **Mittel zur Erhöhung des Rübenkörper- und Weisszuckerertrages von Zuckerrüben und deren Verwendung**

(71) Anmelder: MARTIN-LUTHER-UNIVERSITAT, D-06108 Halle (DE)
(72) Erfinder: Otto, Steffan, Doz. Dr., O-4070 Halle/Saale (DE); Schilling, Günther, Prof. Dr., O-4070 Halle/Saale (DE); Gans, Wolfgang, Dr., O-4020 Halle/Saale (DE)
(74) Vertreter: Matschiner, Barbara, Dr.

(57) **Zusammenfassung**

Erfindungsgemäß besteht das Mittel, das bei seiner Verwendung durch Veränderung des Blatt-Wurzel-Verhältnisses zugunsten des Rübenkörpers zur Erhöhung des Weißzuckerertrages führt, aus einer Mischung von 2,4-Dichlorphenoxyessigsäure, Eisensalzen, z. B. Eisen-(III)-chlorid oder Eisenligninsulfonat, und substituierten 1,2,4-Triazolen wie 1-(Halogenphenoxy)-3,3-dialkyl-1-(1H-1,2,4-triazol-1-yl)-butan-2-on der allgemeinen Formel I, vorzugsweise 1-(4-Chlorphenoxy)-3,3-dimethyl-1-(1H-1,2,4-triazol-1-yl)-butan-2-on, oder 1-(Halogenphenoxy)-3,3-dialkyl-1-(1H-1,2,4-triazol-1-yl)-butan-2-ol, vorzugsweise 1-(4-Chlorphenoxy)-3,3-dimethyl-1-(1H-1,2,4-triazol-1-yl)-butan-2-ol im Verhältnis von 1 bis 5, zu 1,75 bis 17,5, zu 10 bis 15.

## Beschreibung

Die Erfindung betrifft neue Mittel und deren Verwendung zur Erhöhung des Rübenkörper- und Weißzuckerertrages von Zuckerrüben durch Veränderung des Blatt/Wurzel-Verhältnisses zugunsten des Rübenkörpers.

Es ist bekannt, daß durch Kombinationen von 2,3-Dichlorisobutyrat (DCiB) mit Chlorcholinchlorid und/oder 2,4-Dichlorphenoxyessigsäure (2,4-D) das Blatt-Wurzel-Verhältnis bei Wurzelfrüchten, z.B. Betarüben, zugunsten des Rübenkörpers verändert wird (DD-PS 145 880, Int. Cl³. A 01 N 37/02). Ein wesentlicher Nachteil dieser Wirkstoffkombination besteht jedoch darin, daß die 2,4-Dichlorphenoxyessigsäure-Komponente zwar den Rübenkörperertrag bei Zuckerrüben erhöht, aber zugleich epinastisches Wachstum der Blätter hervorruft. Epinastie der Blätter ist häufig mit einer Senkung der Saccharosegehalte im Rübenkörper verbunden (vgl. S. OTTO und G. SCHILLING, Tag.-ber., Akad. Landwirtsch.-Wiss. DDR 231, 65-73 (1985)). Epinastiebildungen der Blätter und Absenkungen der Saccharosegehalte bei alleiniger Anwendung von 2,4-D bei Zuckerrüben wurden auch von E. V. LESCHENKO und A. S. OKANENKO (Aktivnost' i napravlennost' dejstvija sacharozo-siutotazy v Korneplodach svekly. V. Kn.: GRODZINSKOGO, D. M.: Sovremennye problemy fiziologii i biochemii sacharnoj Svekly, Kiev, Naukova Dumka, 87-93 (1981)) gefunden. So konnten - trotz Wurzelmehrerträgen - kaum Zuckerertragssteigerungen erzielt werden. Zur Vermeidung dieser Nachteile ist bisher versucht worden, 2,4-D-Derivate zu entwickeln, die eine 2,4-D-"Stoßwirkung" und folglich epinastieauslösende überhöhte 2,4-D-Konzentrationen im Blatt vermeiden (z.B. DD-PS 269 776 A 1).

Die Erfindung bezweckt, durch Ausbringung einer neuen Wirkstoffkombination den Rübenkörper zu vergrößern und dadurch den Weißzuckerertrag von Zuckerrüben zu erhöhen.

Diese Aufgabe wird erfindungsgemäß dadurch gelöst, daß die Mittel aus Mischungen von 2,4-D (2,4-Dichlorphenoxyessigsäure), Eisensalzen, z.B. Eisen-(III)-chlorid oder Eisenligninsulfonat, und substituierten 1,2,4-Triazolen wie 1-(Halogenphenoxy)-3,3-dialkyl-1-(1H-1,2,4-triazol-1-yl)-butan-2-on der allgemeinen Formel I, Vorzugsweise 1-(4-Chlorphenoxy)-3,3-dimethyl-1-(1H-1,2,4-triazol-1-yl)-butan-2-on (MLU TB), oder 1-(Halogenphenoxy)-3,3-dialkyl-1-(1H-1,2,4-triazol-1-yl)-butan-2-ol der allgemeinen Formel II, vorzugsweise 1-(4-Chlorphenoxy)-3,3-dimethyl-1-(1H-1,2,4-triazol-1-yl)-butan-2-ol, im Verhältnis von 1 bis 5, vorzugsweise 1,25 bis 2,25, zu 1,75 bis 17,5, vorzugsweise 4 bis 8, zu 5 bis 50, vorzugsweise 10 bis 15, bestehen.
Üblicherweise werden diese Mittel mit Hilfs- und Zusatzstoffen, insbesondere flüssigen oder festen Streck- oder Verdünnungsmitteln und/oder oberflächenaktiven Stoffen formuliert.

Außerdem können die erfindungsgemäßen Mittel in Kombination mit anderen Wachstumsregulatoren und/oder Phytohormonen, Düngemitteln oder Pflanzenschutzmitteln formuliert sein und gemeinsam mit solchen Stoffen oder getrennt, auch im Wechsel, appliziert werden.

Die erfindungsgemäßen Mittel werden durch Vermischen der substituierten 1,2,4-Triazole mit den Kombinationspartnern in einem Präparat oder in Form einer Anwendungsmischung hergestellt und liegen dann als Lösung, Emulsion oder Suspension vor. Die erfindungsgemäßen Mittel werden auf die oberirdischen Teile der Zuckerrübenpflanzen appliziert. Der effektive Anwendungszeitraum liegt zwischen Mitte Juni und Ende August.

Die erfindungsgemäßen Mittel werden in Aufwandmengen von 20 bis 100 g/ha, vorzugsweise 25 bis 45 g/ha 2,4 -Dichlorphenoxyessigsäure, 35 bis 350 g/ha, vorzugsweise 80 bis 160 g/ha Eisensalze, bezogen auf Eisen, und 100 bis 1 000 g/ha, vorzugsweise 200 bis 300 g/ha substituierte 1,2,4-Triazole appliziert.

Die Erfindung soll nachstehend an vier Ausführungsbeispielen näher erläutert werden.

### Beispiel 1

### Gefäßversuch mit Zuckerrüben:

Die Versuche wurden in Mitscherlichgefäßen durchgeführt, wobei folgende Versuchsanordnung galt:
Boden/Quarz-Gemisch (1 kg/ 5 kg je Gefäß mit schwach saurem pH-Wert), Nührstoffversorgung in Form von 2,8 g CaHPO₄ · 2 H₂O, 1,6 g K₂SO₄, 3 g MgSO₄ · 7 H₂O, 2 ml 5 %ige FeCl₃-Lösung, 1 ml A-Z-Lösung (a) nach Hoagland, 3 g N als NH₄NO₃ und/oder KNO₃ in mehreren Einzelgaben.
Wassergaben (aqua dest.) erfolgten durch tägliches Gießen nach Gewicht (55 % der maximalen Wasserkapazität). Die Applikation wurde Anfang August durch Spritzen wäßriger Lösungen auf den Blattapparat vorgenommen. Zur Erfassung der Epinastie der Blätter wurde eine Epinastiebonitur 3 Tage, 6 Tage und 30 Tage nach der Applikation durchgeführt. Dabei bedeutet 9 ohne Epinastie und 1 totale Epinastie, d. h. alle Blätter zeigen Verdrehungen und Deformationen.
Zum Erntezeitpunkt im Oktober wurde die Blattzahl je Pflanze einschließlich abgestorbene Blätter bestimmt. Die Ergebnisse bringt Tab. 1.
Man erkennt, daß der Eisensalzzusatz der Epinastiebildung von 2,4-D deutlich entgegenwirkt, daß jedoch der MLU TB-Zusatz zum 2,4-D-Eisensalzgemisch eine fast vollständige Epinastieaufhebung erreicht. Bei der MLU TB-Zugabe zu 2,4-D ohne Eisensalz entsteht keine stabile Epinastieaufhebungswirkung. Offensichtlich liegt eine synergistische Wirkung mit dem Eisensalz vor. DCiB bleibt ohne Effekt. Wie die Ergebnisse der Blattanzahlbeeinflussung zeigen, bleibt der gewünschte 2,4-D-Effekt auf die Reduktion der Blattzahl bei der Epinastieaufhebungsvariante 2,4-D + Eisensalz + MLU TB voll erhalten.

**Tab.1**

| Effekt von MLU TB auf die 2,4-D-Wirkung bei Zuckerrüben im Gefäßversuch | | | | | |
|---|---|---|---|---|---|
| | Epinastie-Bonitur (1 = totale Epinastie, 9 = ohne Epinastie) | | | Blattanzahl | |
| | 3 d n.d. Appl. | 6 d n.d. Appl. | 30 d n.d. Appl. | Stk/Pfl. | rel. |
| Kontrolle | 9 | 9 | 9 | 44,2 | 100 |
| 2,4-D¹⁾ | 3,5 | 3,0 | 3,0 | 33,6 | 76 ^{x}⁾ |
| 2,4-D + Fe²⁾ | 6,8 | 5,0 | 5,0 | 33,9 | 77^{x}⁾ |
| 2,4-D + Fe + MLU TB³⁾ | 8,5 | 8,3 | 7,8 | 36,0 | 81^{x}⁾ |
| 2,4-D + MLU TB | 7,3 | 5,5 | 3,0 | 36,5 | 83^{x}⁾ |
| MLU TB | 9 | 9 | 9 | 40,0 | 91 |
| 2,4-D + Fe + DCiB⁴⁾ | 6,8 | 5,0 | 5,0 | 34,5 | 78^{x}⁾ |

| | | | | | |
|---|---|---|---|---|---|
| ^{x)}Signifikanter Effekt gegenüber der Kontrolle (t-Test, α ≦5 %) | | | | | |
| ¹⁾2,4-D 50 g/ha | | | | | |
| ²⁾Fe = Eisen-(III)-chlorid (500 g/ha als Verbindung) | | | | | |
| ³⁾MLU TB: 260 g/ha; gleiche Ergebnisse bei Anwendung von 1-(4-Chlorphenoxy)-3,3-dimethyl-1-(1H-1,2,4-triazol-1-yl)-butan-2-ol | | | | | |
| ⁴⁾DCiB : 500 g/ha | | | | | |

### Beispiel 2

Feldversuch mit Zuckerrüben:
Die Versuche wurden auf zwei verschiedenen Lößstandorten (sL Lö 2 65/64, D 6 c und Lö 6 43) durchgeführt.
Die Mittel gelangten als wäßrige Lösungen (Tankmischungen) durch Spritzen auf trockene Pflanzenbestände, wobei die Behandlung Ende Juli/Anfang August vorgenommen worden war. Jede Wirkstoffvariante wurde bei einer Parzellengröße von mindestens 20 m² (Ernteparzelle) in vierfacher Wiederholung geprüft. Aussaat, Pflege und Düngung erfolgten zu den agrotechnisch günstigen Terminen. Die Ergebnisse sind Tab. 2 zu entnehmen.

**Tab.2**

| Wirkung von MLU TB in Kombination mit MLU ZR¹⁾ bei Zuckerrüben Ponemo auf den Wurzelkörperertrag in Feldversuchen 1988 und 1989 | | | |
|---|---|---|---|
| Varianten | Anzahl der Versuche | Wurzelkörperertrag | |
| | | dt/ha | rel. z.Kontr. |
| Kontrolle | n = 7 | 444 | 100 |
| MLU ZR¹⁾ | | 466 | 104,9^{xx} |
| MLU ZR¹⁾+ MLU TB²⁾ | | 484 | 109,0^{xxxxxx}^{x} |

| | | | |
|---|---|---|---|
| ^{x}Anzahl der Versuche mit signifikanten Effekten gegenüber der Kontrolle (t-Test, α ≦ 5 %) | | | |
| ¹⁾MLU ZR = Mischung aus 2,4-D (25 g/ha) und Eisen-(III)-chlorid (500 g/ha) | | | |
| ²⁾MLU TB: 260 ... 520 g Wirkstoff/ha. Eine fungizide Wirkung wurde nicht festgestellt. Bei Anwendung von MLU TB allein gab es keinen Effekt. | | | |

### Beispiel 3

Feldversuche mit Zuckerrüben:
Versuchsdurchführung vgl. Beispiel 2. In einigen der im Beispiel 2 genannten Versuche wurden Saccharosegehalte, α-Amino-Stickstoff-, K- und Na-gehalte im Rübenbrei bestimmt, so daß die Weißzuckererträge ermittelt werden konnten. Die Ergebnisse werden in Tab. 3 gezeigt.

**Tab.3**

| Effekt von MLU TB in Kombination mit MLU ZR bei Zuckerrüben Ponemo auf den Weißzuckerertrag in Feldversuchen 1988 und 1989 | | | | | | |
|---|---|---|---|---|---|---|
| Variante | Anzahl der Versuche | Wurzelkörperertrag | | Saccharosegehalt ^{o}S | Weißzuckerertrag | |
| | | dt/ha | rel. | | dt/ha | rel. |
| Kontrolle | | 450 | 100 | 16,5 | 62,1 | 100 |
| MLU ZR¹⁾ | n = 4 | 466 | 103,6^{x} | 16,4 | 63,5 | 102,3 |
| MLU ZR¹⁾ +MLU TB²⁾ | | 485 | 107,8^{xxxx} | 16,5 | 66,9 | 107,7^{xxxx} |
| Kontrolle | | 493 | 100 | 16,7 | 69,2 | 100 |
| MLU ZR¹⁾ | n = 2 | 511 | 103,7 | 16,5 | 70,3 | 101,6 |
| MLU ZR¹⁾ +MLU TB²⁾ | | 534 | 108,3 | 16,7 | 74,8 | 108,1^{xx} |
| Kontrolle | | 406 | 100 | 16,3 | 54,9 | 100 |
| MLU ZR¹⁾ + DCiB³⁾ | n = 2 | 421 | 103,7 | 16,3 | 56,6 | 103,1 |
| MLU ZR¹⁾+ DCiB³⁾ + MLU TB²⁾ | | 435 | 107,1^{xx} | 16,3 | 59,0 | 107,5^{xx} |

| | | | | | | |
|---|---|---|---|---|---|---|
| ^{x}Anzahl der Versuche mit signifikanten Effekten gegenüber der Kontrolle (t-Test, α ≦ 5 %) | | | | | | |
| ¹⁾MLU ZR = Mischung aus 25 g/ha 2,4-D und 0,5 kg/ha Eisen-(III)-chlorid. | | | | | | |
| ²⁾MLU TB: 260 g Wirkstoff/ha. MLU TB allein blieb ohne Effekt. Eine fungizide Wirkung wurde nicht festgestellt. | | | | | | |
| ³⁾DCiB: 0,5 kg/ha | | | | | | |

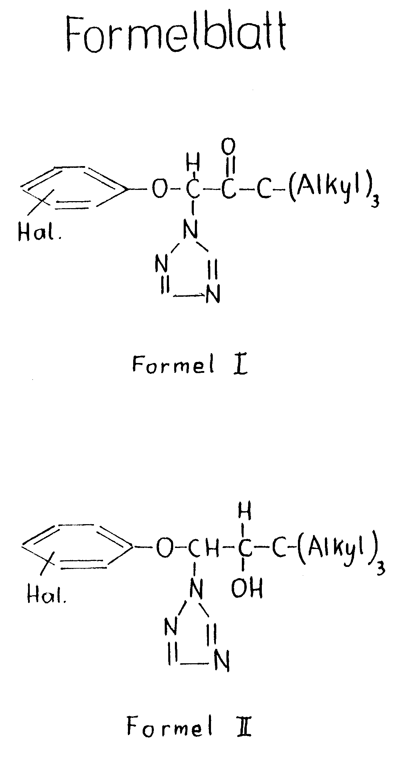

## Patentansprüche

1. Mittel zur Erhöhung des Rübenkörper- und Weißzuckerertrages von Zuckerrüben gekennzeichnet durch Mischungen aus 2,4-Dichlorphenoxyessigsäure, Eisensalzen und substituierten 1,2,4-Triazolen wie 1-(Halogenphenoxy)-3,3-dialkyl-1-(1H-1,2,4-triazol-1-yl)-butan-2-on der allgemeinen Formel I oder 1-(Halogenphenoxy)-3,3-dialkyl-1-(1H-1,2,4-triazol-1-yl)-butan-2-ol der allgemeinen Formel II im Verhältnis von 1 bis 5, vorzugsweise 1,25 bis 2,25, zu 1,75 bis 17,5, vorzugsweise 4 bis 8, zu 5 bis 50, vorzugsweise 10 bis 15.

2. Mittel nach Anspruch 1, die 1-(4-Chlorphenoxy)-3,3-dimethyl-1-(1H-1,2,4-triazol-1-yl)-butan-2-on oder 1-(4-Chlorphenoxy)-3,3-dimethyl-1-(1H-1,2,4-triazol-1-yl)-butan-2-ol enthalten.

3. Mittel nach Anspruch 1 und 2, in denen die substituierten 1,2,4-Triazole zusammen mit flüssigen und/oder festen Streck- oder Verdünnungsmitteln und/oder oberflächenaktiven Stoffen als Lösung, Emulsion oder Suspension formuliert sind.

4. Mittel nach Anspruch 1 bis 3, enthaltend die substituierten 1,2,4-Triazole in Kombination mit anderen Wachstumsregulatoren und/oder Phytohormonen, Düngemitteln oder Pflanzenschutzmitteln.

5. Verfahren zur Herstellung der Mittel zur Erhöhung des Rübenkörper- und Weißzuckerertrages von Zuckerrüben, dadurch gekennzeichnet, daß 2,4-Dichlorphenoxyessigsäure, Eisensalze und 1,2,4-Triazole, gegebenenfalls mit den Zusätzen gemäß Ansprüche 2 bis 4, gemischt werden.

6. Verwendung von Mitteln nach Anspruch 1 bis 5 zur Erhöhung des Rübenkörper- und Weißzuckerertrages von Zuckerrüben.

7. Verwendung gemäß Anspruch 6, dadurch gekennzeichnet, daß die Mittel in Aufwandmengen von 20 bis 100 g/ha, vorzugsweise 25 bis 45 g/ha 2,4 -Dichlorphenoxyessigsäure, 35 bis 350 g/ha, vorzugsweise 80 bis 160 g/ha Eisensalze bezogen auf Eisen und 100 bis 1 000 g/ha, vorzugsweise 200 bis 300 g/ha substituierte 1,2,4-Triazole zwischen Mitte Juni und Ende August auf die oberirdischen Pflanzenteile appliziert werden.
